Europäisches Patentamt

European Patent Office

Office européen des brevets

(11) Veröffentlichungsnummer : **0 094 931**
**B1**

(12) **EUROPÄISCHE PATENTSCHRIFT**

(45) Veröffentlichungstag der Patentschrift :
29.07.87

(21) Anmeldenummer : 83890084.3

(22) Anmeldetag : 16.05.83

(51) Int. Cl.⁴ : **F 24 J   3/00**, F 25 B   9/00,
C 09 K   5/04

(54) **Thermodynamisches Verfahren zum Überführen von Wärme niedrigeren Temperaturniveaus auf höheres Temperaturniveau.**

(30) Priorität : 18.05.82 AT 1967/82

(43) Veröffentlichungstag der Anmeldung :
23.11.83 Patentblatt 83/47

(45) Bekanntmachung des Hinweises auf die Patenterteilung : 29.07.87 Patentblatt 87/31

(84) Benannte Vertragsstaaten :
BE CH DE FR GB IT LI NL SE

(56) Entgegenhaltungen :
DE-A- 2 525 984
DE-A- 2 928 675
GB-A-   645 096
GB-A-   778 483
US-A- 2 492 725
US-A- 2 951 350
US-A- 3 336 763
US-A- 3 444 085
US-A- 3 922 228

(73) Patentinhaber : VOEST-ALPINE Aktiengesellschaft
Muldenstrasse 5
A-4020 Linz (AT)

(72) Erfinder : Moser, Franz, Prof. Dr.
Steinbergstrasse 22
A-8302 Nestelbach (AT)
Erfinder : Schnitzer, Hans, Dipl.-Ing. Dr.
Kainbach 181
A-8047 Graz (AT)
Erfinder : Huemer, Hans, Dipl.-Ing. Dr.
Schlögelgasse 9
A-8010 Graz (AT)

(74) Vertreter : Wolfram, Gustav, Dipl.-Ing.
Schwindgasse 7 P.O. Box 205
A-1041 Wien (AT)

## Beschreibung

Die Erfindung betrifft ein thermodynamisches Verfahren zum Überführen von Wärme niedrigeren Temperaturniveaus auf höheres Temperaturniveau, wobei ein aus einem Gemisch wenigstens zweier Komponenten bestehendes Medium in einem geschlossenen Kreislauf geführt wird, das Medium an wenigstens einer Stelle des Kreislaufes durch Wärmeentnahme aus einer Wärmequelle niedrigerer Temperatur verdampft, komprimiert, an wenigstens einer anderen Stelle des Kreislaufes unter Wärmeübertragung auf eine Wärmesenke höherer Temperatur kondensiert und wieder entspannt wird, und wobei als im Kreislauf geführtes Medium ein Gemisch, welches sich entweder unter dem niedrigeren Druck beim Verdampfen oder unter dem höheren Druck bei Kondensieren azeotrop verhält, verwendet wird.

Der dem Verfahren zugrundeliegende Kreisprozeß repräsentiert das Prinzip der Wärmepumpe. Bei gebräuchlichen Wärmepumpensystemen unterscheidet man zunächst zwischen Kompressionswärmepumpen (KWP) und Absorptionswärmepumpen (AWP), wobei letztere nach ihrer Betriebsart weiter in konventionelle AWP und Wärmetrafos unterteilt werden können.

Alle Wärmepumpen verfolgen das Ziel, verfügbare Abwärme bzw. Umgebungswärme, welche als Wärmequelle dient, auf ein gewünschtes höheres Temperaturniveau eines Wärmeverbrauchers, der sogenannten Wärmesenke, anzuheben. Zu diesem Zweck muß mechanische Energie aufgewendet werden. Bei AWP wird durch Absorption des Kreislaufmediums bei niedrigem Druck in einem Hilfsmedium und Desorption des Mediums bei höherem Druck der Aufwand an mechanischer Energie zwar verringert, jedoch wird eine bestimmte Menge an hochtemperierter Wärme wieder zur Desorption bzw. zum Austreiben des Kreislaufmediums benötigt. Die Absorptionswärme ist gleichfalls als Nutzwärme verfügbar.

Herkömmliche Wärmepumpen arbeiten in den meisten Fällen mit Kreislaufmedien, welche nur aus einer einzigen Komponente bestehen. Bei Einstoffsystemen bleibt die Temperatur des Mediums während des gesamten Verdampfungsbzw. Kondensationsprozesses konstant. Erfolgt der Wärmeaustausch mit einer Wärmequelle bzw. -senke, welche während des Austauschvorganges zunehmend kälter bzw. wärmer wird, wie dies beispielsweise bei der Abkühlung bzw. Aufwärmung von Flüssigkeiten oder Gasen der Fall ist, wird die eingesetzte Energie nicht optimal genützt, d. h. die Leistungszahl der Wärmepumpe ist schlecht.

Wie bereits von H. Lorenz, Zeitschrift für die gesamte Kälte-Industrie 1, 8 (1895), dargelegt wurde, kann in einem solchen Fall durch Einsatz eines nicht azeotropen Mehrstoffgemisches als Kreislaufmedium eine Verbesserung der Leistungszahl erreicht werden, wobei selbstverständlich das Kreislaufmedium und die Medien, aus denen Wärme aufgenommen bzw. an die Wärme abgegeben werden soll, in den Wärmetauschern jeweils im Gegenstrom zueinander geführt werden müssen. Das als Wärmequelle dienende Medium kühlt sich somit kontinuierlich ab und der Verdampfungsvorgang des Kreislaufmediums läuft innerhalb des gleichen Temperaturintervalles oder eines nur geringfügig abweichenden Intervalles ab. Der umgekehrte Vorgang — ebenfalls mit gleitendem Temperaturverlauf — findet am Ort der Wärmesenke unter Kondensation des Kreislaufmediums statt. Das Verdampfungs- bzw. Kondensationsverhalten eines zweistoffgemisches wird durch die bekannten T-x-Diagramme (T = Temperatur, x = Molenbruch) wiedergegeben. Der bei einer bestimmten Temperatur mit einem flüssigen Zweistoffgemisch bestimmter Zusammensetzung im Gleichgewicht befindliche Dampf ist demnach stets reicher an leichter siedender Komponente als die flüssige Phase.

Es wurde auch bereits vorgeschlagen, azeotrope Gemische zur Erweiterung der Palette von für Wärmepumpen verwendbaren Reinstoffen einzusetzen, u. zw. zumeist schwer trennbare Gemische halogenierter aliphatischer Kohlenwasserstoffe. So bezieht sich die GB-A-645 096 auf eine azeotrope Mischung von unsymmetrisch substituiertem Difluoräthan und Dichlordifluormethan sowie auf die Verwendung einer solchen Mischung als azeotrop verdampfendes Kühlmittel. Das verwendete binäre System weist ein Siedetemperaturmaximum auf und soll zur Substitution von Dichlordifluormethan dienen. Durch diese Substitution wird eine Kühlleistungssteigerung in einem vorgegebenen Kühlaggregat erzielt, und es ist demnach möglich, den Kompressor mit geringerer Geschwindigkeit zu betreiben.

In der veröffentlichten französischen Anmeldung Nr. 2 319 861 ist ein als Wärmepumpe arbeitender thermodynamischer Kreisprozeß beschrieben, bei welchem als Kreislauffluid eine nicht azeotrope Mischung aus mehreren reinen Komponenten verwendet wird. Diese Mischung muß eine Reihe von Bedingungen hinsichtlich Beständigkeit, Verdampf- bzw. Kondensierbarkeit und Mischbarkeit ihrer Komponenten erfüllen.

Die US-A-2,492,725 beschäftigt sich mit einem Kühlverfahren, bei dem gleichfalls eine Mehrzahl von miteinander mischbaren, jedoch kein Azeotrop bildenden Kühlmittelkomponenten — konkret $CCl_2F_2$ und $CHClF_2$ — als Kreislaufmedium zum Einsatz gelangt. Das Kühlmittel wird im Gegenstrom zu den kondensierenden Dämpfen geführt und auch der Wärmeaustausch zwischen dem zu kühlenden Medium und dem progressiv verdampfenden Kühlmittel erfolgt im Gegenstrom.

In jenen Einsatzfällen von Wärmepumpen, bei denen entweder die Temperatur nur der Wärmequelle oder nur der Wärmesenke konstant bleibt, behalf man sich damit, den Kreisprozeß mehrstufig zu führen. Eine entscheidende Verbesserung der Leistungszahl war auf diese Weise jedoch nicht erzielbar.

Die Erfindung stellt sich die Aufgabe, die Leistungszahl von Wärmepumpen beliebiger Ausführungsform in jenen Fällen ohne apparativen Mehraufwand einfach und betriebssicher zu erhöhen.

Diese Aufgabe wird unter Ausnützung der bekannten Tatsache, daß azeotrope Mischungen in Abhängigkeit von Druck und Temperatur veränderliche Zusammensetzung aufweisen, bei einem Verfahren der eingangs definierten Art dadurch gelöst,

daß entweder das Mengenverhältnis der im Gemisch enthaltenen Komponenten oder der Druck des im Kreislauf geführten Mediums so eingestellt wird,

daß das Gemisch entweder bei einem ersten Druck und bei einer geringfügig unterhalb einer Wärmequelle von konstanter Temperatur liegenden Temperatur konstant siedet und bei einem vom ersten Druck verschiedenen zweiten Druck innerhalb eines abfallenden Temperaturbereiches kondensiert, wobei die Temperaturdifferenz zwischen der Wärmesenke und dem kondensierenden Medium während des Wärmeüberganges im wesentlichen konstant gehalten wird, oder

bei einem ersten Druck und bei einer geringfügig über einer Wärmesenke von konstanter Temperatur liegenden Temperatur konstant kondensiert und bei einem vom ersten Druck verschiedenen zweiten Druck innerhalb eines Bereiches steigender Temperatur verdampft, wobei die Temperaturdifferenz zwischen der Wärmequelle und dem verdampfenden Medium während des Wärmeüberganges im wesentlichen konstant gehalten wird.

Da in Wärmepumpenkreisläufen immer vollständig verdampft und kondensiert wird, ist die Zusammensetzung des Mediums an jeder Stelle des geschlossenen Kreislaufes gleich.

Als Wärmequelle von konstanter Temperatur kommt beispielsweise kondensierender Abdampf in Frage, jedoch kann auch Grundwasser bzw. Erdreich als Wärmereservoir konstanter Temperatur angesehen werden. Weiters kann abgekühltes Heizwasser aus Fernwärmenetzen zum Verdampfen des Kreislaufmediums herangezogen werden. Das abgekühlte Heizwasser fällt dabei in solch großen Mengen an, daß es sich während des Wärmetausches mit dem Kreislaufmedium nur um vernachlässigbare Beträge abkühlt und seine Temperatur daher gleichfalls praktisch konstant ist. Als Wärmeverbraucher kommt ein beliebiger flüssiger oder gasförmiger Stoff in Betracht, welcher sich kontinuierlich erwärmt, beispielsweise kann Trocknerluft aufgeheizt werden.

Abwasser stellt z. B. eine Wärmequelle variabler Temperatur dar, da seine Abkühlung beim Durchlaufen eines Wärmetauschers im Gegenstrom zum Kreislaufmedium über einen bestimmten Temperaturbereich erfolgt, dessen Grenzen durch die Anfangstemperatur, die spezifische Wärme und die Durchsatzmenge des Abwassers, die Austauscherfläche sowie durch die Verdampfungsenthalpie der Kreislaufmediums festgelegt sind. Als Wärmesenke ist in diesem Fall eine Flüssigkeit geeignet, welche bei konstanter Temperatur siedet; so kann z. B. Wasser zur Erzeugung von Niederdruckdampf erhitzt werden.

Um die Temperaturdifferenz zwischen der Wärmesenke und dem kondensierenden Medium bzw. zwischen der Wärmequelle und dem verdampfenden Kreislaufmedium konstant zu halten, stehen als Variable die Natur der für das Kreislaufgemisch eingesetzten Komponenten, die Druckverhältnisse im geschlossenen Kreislauf der Wärmepumpe und die Austauscherflächen zur Verfügung, wobei selbstverständlich eine Druckänderung wieder eine Verlagerung der Siedetemperatur sowie eine geänderte Zusammensetzung des azeotropen Gemisches bedingt.

Wird das Mengenverhältnis der im Gemisch enthaltenen Komponenten eingestellt, so ist der azeotrope Punkt bei einem bestimmten Druck definiert.

Wählt man bestimmte Drucke des im Kreislauf geführten Mediums vor, ist einerseits der azeotrope Punkt festlegbar und andererseits das Temperaturintervall beim Verdampfen bzw. Kondensieren des Kreislaufmediums veränderbar.

Vorzugsweise wird ein Zweistoffgemisch, bestehend aus einem Alkohol und einem Kohlenwasserstoff, als Kreislaufmedium verwendet, wobei sich insbesondere ein Gemisch aus Äthanol und Benzol oder aus n-Heptan und Butan-1-ol als für viele Einsatzzwecke geeignet erwiesen hat. Gemische dieser Art sind nicht korrosiv sowie thermisch und chemisch beständig.

Die Erfindung wird im folgenden anhand der Zeichnung und den Beispielen näher erläutert. In den Fig. 1 und 2 sind Diagramme dargestellt, welche die übertragene Wärmemenge in Abhängigkeit von der Temperatur im Verlauf des Kreisprozesses veranschaulichen. Fig. 3 zeigt Siedediagramme des Systems n-Heptan-Butan-1-ol bei verschiedenen Drucken; Fig. 4 ist ein vergrößerter Ausschnitt aus diesen Diagrammen für nur zwei Drucke. Fig. 5 zeigt Siedediagramme für das System Äthanol-Benzol bei zwei verschiedenen Drucken.

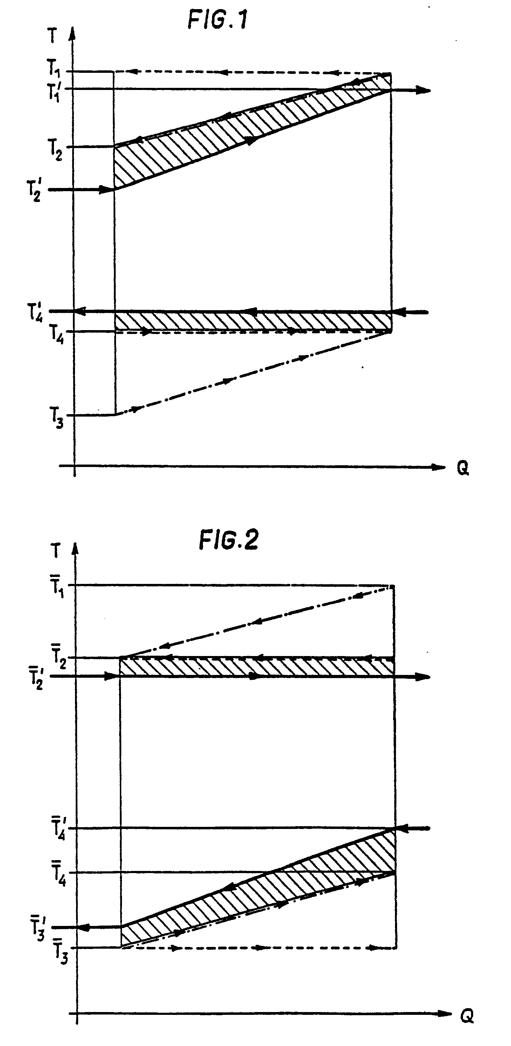

In Fig. 1 ist eine Wärmequelle auf dem konstanten Temperaturniveau $T'_4$ als stark ausgezogene Linie eingetragen. Von dieser Wärmequelle wird Wärme auf ein Kreislaufmedium übertragen, welches dabei verdampft wird. Der Dampf wird durch Aufwand mechanischer Energie auf eine höhere Temperatur $T_1$ gebracht und kondensiert, wobei die Kondensationswärme auf eine Wärmesenke übertragen wird, deren Ausgangstemperatur $T'_2$ kontinuierlich auf eine Temperatur $T'_1$ angehoben wird. Der Temperaturverlauf des Wärmesenkenmediums ist gleichfalls stark ausgezogen eingezeichnet. Auf der Abszisse ist die Wärmemenge mit Q bezeichnet. Der Kreisprozeß ist für drei verschiedene, kreislaufgeführte Medien veranschaulicht. Für den Fall eines Reinstoffes resultiert der strichliert eingetragene Carnot'sche-Prozeß. Wird ein Mehrstoffgemisch ohne Azeotropbildung eingesetzt, ist ein (strichpunktiert eingezeichneter) Prozeß nach H. Lorenz verifiziert. Verwendet man erfindungsgemäß ein Medium, welches sich unter dem niedrigeren Druck beim Verdampfen azeotrop verhält, verläuft der Kreisprozeß nach den voll ausgezogenen Linien, wobei das Kreislaufmedium bei konstanter Temperatur $T_4$ verdampft und innerhalb des abfallenden Temperaturbereiches zwischen $T_1$ und $T_2$ kondensiert. Die Temperaturdifferenz zwischen der Wärmesenke und dem kondensierenden Medium bleibt während des Wärmeüberganges weitgehend konstant. Durch die weiter oben bereits beschriebenen Maßnahmen läßt sich die Parallelität der Streckenzüge, welche den Temperaturverlauf der Wärmesenke und den Temperaturverlauf des Kreislaufmediums darstellen, beliebig verbessern. Die schraffierten Flächen $T_1$, $T_2$, $T'_2$, $T'_1$ bzw. die Flächen zwischen den Niveaus konstanter Temperaturen $T_4$ und $T'_4$ sind für das erfindungsgemäße Verfahren am kleinsten, d. h. daß mittels der erfindungsgemäßen Anpassung an den Prozeßverlauf bzw. an den Temperaturverlauf von Wärmequelle und Wärmesenke die Leistungszahl einer Wärmepumpe maximiert wird.

Sowohl bei Verwendung eines Reinstoffes als auch bei Verwendung eines nichtazeotropen Mehrstoffgemisches sind die entsprechenden Flächen in Summe größer, da entweder der Verdampfungsvorgang eines Mehrstoffgemisches zwischen einer Temperatur $T_3$ und einer Temperatur $T_4$ erfolgt oder — nach Carnot — die Kondensation des Reinstoffes bei konstanter Temperatur $T_1$ stattfindet und die Temperatur des Wärmesenkenmediums durch Gegenstrom-Wärmeaustausch von einer tieferen Temperatur $T'_2$ auf die Temperatur $T'_1$ angehoben werden muß.

Fig. 2 sind in analoger Weise die Verhältnisse für den Fall einer Wärmequelle zu entnehmen, welche sich während des Wärmeaustausches mit den drei verschiedenen Kreislaufmedien von einer Temperatur $\overline{T}'_4$ auf eine Temperatur $\overline{T}'_3$ abkühlt, während die Wärmesenke im Verlauf der Wärmeentnahme aus dem Kreislaufmedium auf konstantem Temperaturniveau $\overline{T}'_2$ bleibt.

Bei Verwendung eines Reinstoffes als Kreislaufmedium erfolgt dessen Verdampfung bei der Temperatur $\overline{T}_3$, die Temperaturdifferenz zwischen Wärmequellenmedium und verdampfendem Reinstoff ist an der Eintrittsstelle des Wärmequellenmediums in den Wärmetauscher zunächst sehr groß $(\overline{T}'_4 - \overline{T}_3)$ und hat sich an der Austrittsstelle auf den Wert $\overline{T}'_3 - \overline{T}_3$ erniedrigt. Dies beeinträchtigt die Reversibilität des Gesamtprozesses und damit die Leistungszahl der Wärmepumpen.

Wird ein nicht azeotropes Zweistoffgemisch als Kreislaufmedium verwendet, kondensiert dieses innerhalb des Temperaturintervalles von $\overline{T}_1$ bis $\overline{T}_2$ und die Temperatur des Wärmesenkenmediums bleibt konstant. Wieder gelten die voranstehend hinsichtlich der unterschiedlichen Temperaturdifferenzen der im Gegenstrom geführten Medien angestellten Überlegungen. Ein Kreislaufmedium, welches zwischen den Temperaturen $\overline{T}_3$ und $\overline{T}_4$ vollständig verdampft und sich unter dem höheren Druck beim Kondensieren azeotrop verhält, ist diesen Gegebenheiten besser angepaßt.

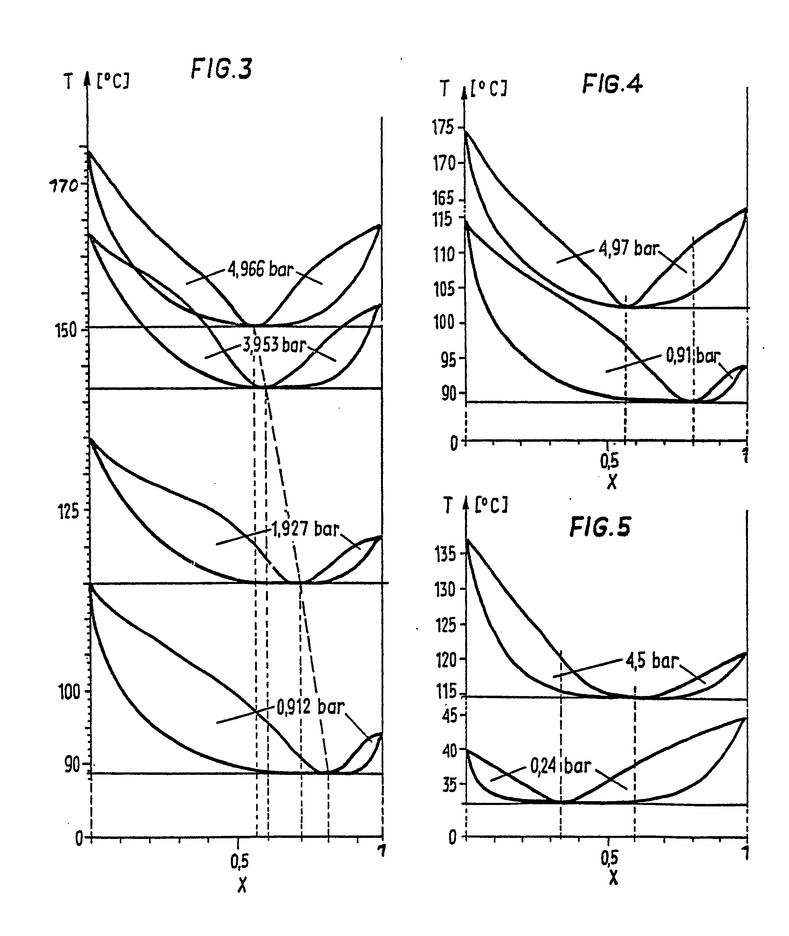

In Fig. 3 ist auf der Abszisse der Molenbruch n-Heptan mit X bezeichnet. Die Abhängigkeit des azeotropen Punktes vom Druck ist gut erkennbar. Die azeotropen Punkte bei verschiedenen Drücken sind durch eine strichlierte Linie miteinander verbunden.

Beispiel 1

Als Kreislaufmedium wird ein Gemisch aus 80 Mol % n-Heptan und 20 Mol % Butan-1-ol verwendet, welches unter einem Druck von 0,91 bar bei 89 °C konstant siedet. Kondensierender Abdampf wird als Wärmequelle konstanter Temperatur zum Verdampfen des Kreislaufmediums genützt. Das gasförmige Gemisch wird anschließend auf einen Druck von 4,97 bar komprimiert und in einem Wärmeaustauscher im Gegenstrom zu Trocknerluft (Wärmesenke bzw. -verbraucher) geführt, welche mit einer Temperatur von 130 °C eintritt. Das Kreislaufmedium kondensiert im Verlauf des Wärmeaustausches mit der Trocknerluft in einem Temperaturbereich von 153 bis 159 °C die Trocknerluft erwärmt sich auf 137 °C Austrittstemperatur. Die Siedediagramme des verwendeten Kreislaufmediums bei den im geschlossenen WP-Kreislauf herrschenden Drücken sind aus Fig. 4 ersichtlich, worin X den Molenbruch n-Heptan bedeutet.

Beispiel 2

Man verwendet ein Gemisch von 56 Mol % n-Heptan und 44 Mol % Butan-1-ol als Kreislaufmedium, welches unter einem Druck von 0,91 bar innerhalb eines Temperaturbereiches von 89 bis 98 °C vollständig in Dampfform überführbar ist und sich unter einem Druck von 4,97 bar azeotrop verhält (Fig. 4) als Kreislaufmedium. Als Wärmequelle dient ein 120 °C heißes Öl aus umlaufgeschmierten Maschinenanlagen, welches sich während des Gegenstrom-Wärmeaustausches auf 106 °C abkühlt. Das Kreislaufmedium kondensiert nach Kompression bei einer konstanten Temperatur von 150 °C. Die Kondensationswärme wird zur Erzeugung von Niederdruckdampf genützt.

Beispiel 3

Man verfährt analog Beispiel 1, setzt jedoch ein Gemisch aus 34 Mol % Äthanol und 66 Mol % Benzol als Kreislaufmedium ein. Gemäß Fig. 5, worin X den Molenbruch von Äthanol symbolisiert, siedet ein solches Gemisch unter einem Druck von 0,24 bar konstant bei 33 °C. Kondensation erfolgt unter 4,5 bar Druck in einem Bereich von 116 bis 121 °C. Als Wärmequelle wird das in großen Mengen anfallende warme Abgas von Linde-Kältemaschinen herangezogen. Die Kondensationswärme dient zum teilweisen Wasserentzug aus wasserreichen, gut pumpbaren Schlämmen.

Beispiel 4

Kühlwasser einer Temperatur von ca. 60 °C wird zum kontinuierlichen Verdampfen eines aus einer Mischung von 59 Mol% Äthanol und 41 Mol% Benzol bestehenden und unter einem Druck von 0,24 bar befindlichen Kreislaufmediums verwendet. Zwischen 33 und 38 °C ist ein Gemisch von flüssiger und gasförmiger Phase im Niederdruckteil des geschlossenen WP-Kreislaufes beständig (Fig. 5). Die durch den als Wärmequelle für die WP dienenden Wärmetauscher strömende Kühlwassermenge wird so geregelt, daß das Kühlwasser mit einer Temperatur von ca. 52 °C austritt. Der Dampf des Kreislaufmediums wird auf 4,5 bar komprimiert. Die während seiner anschließenden Kondensation bei konstant 115 °C (Fig. 5) frei werdende Wärmemenge wird zur Erzeugung von Niederdruckdampf verwendet.

**Patentansprüche**

1. Thermodynamisches Verfahren zum Überführen von Wärme niedrigeren Temperaturniveaus auf höheres Temperaturniveau, wobei ein aus einem Gemisch wenigstens zweier Komponenten bestehendes Medium in einem geschlossenen Kreislauf geführt wird, das Medium an wenigstens einer Stelle des Kreislaufes durch Wärmeentnahme aus einer Wärmequelle niedrigerer Temperatur verdampft, komprimiert, an wenigstens einer anderen Stelle des Kreislaufes unter Wärmeübertragung auf eine Wärmesenke höherer Temperatur kondensiert und wieder entspannt wird, und wobei als im Kreislauf geführtes Medium ein Gemisch, welches sich entweder unter dem niedrigeren Druck beim Verdampfen oder unter dem höheren Druck bei Kondensieren azeotrop verhält, verwendet wird, dadurch gekennzeichnet,

daß entweder das Mengenverhältnis der im Gemisch enthaltenen Komponenten oder der Druck des im Kreislauf geführten Mediums so eingestellt wird,

daß das Gemisch entweder bei einem ersten Druck und bei einer geringfügig unterhalb einer Wärmequelle von konstanter Temperatur liegenden Temperatur konstant siedet und bei einem vom ersten Druck verschiedenen zweiten Druck innerhalb eines abfallenden Temperaturbereiches kondensiert, wobei die Temperaturdifferenz zwischen der Wärmesenke und dem kondensierenden Medium während des Wärmeüberganges im wesentlichen konstant gehalten wird, oder

bei einem ersten Druck und bei einer geringfügig über einer Wärmesenke von konstanter Temperatur liegenden Temperatur konstant kondensiert und bei einem vom ersten Druck verschiedenen zweiten Druck innerhalb eines Bereiches steigender Temperatur verdampft, wobei die Temperaturdifferenz zwischen der Wärmequelle und dem verdampfenden Medium während des Wärmeüberganges im wesentlichen konstant gehalten wird.

2. Verfahren nach Anspruch 1, dadurch gekennzeichnet, daß ein Zweistoffgemisch, bestehend aus einem Alkohol und einem Kohlenwasserstoff, als Kreislaufmedium verwendet wird.

3. Verfahren nach Anspruch 2, dadurch gekennzeichnet, daß ein Gemisch aus Äthanol und Benzol verwendet wird.

4. Verfahren nach Anspruch 2, dadurch gekennzeichnet, daß ein Gemisch aus n-Heptan und Butan-1-ol verwendet wird.

**Claims**

1. A thermodynamic process for converting heat of a low temperature level to a higher temperature level, wherein a medium consisting of a mixture of at least two components is conducted in a closed cycle, the medium, on at least one point of the cycle is evaporated by heat removal from a heat source of lower temperature, is compressed, on at least one other point of the cycle, is condensed to a heat sink of a higher temperature by heat transfer and is again released, and wherein, as the recirculated medium, a mixture is used that behaves azeotropic either under the lower pressure during evaporation or under the higher pressure during condensation, characterised in that

either the quantitative ratio of the components contained in the mixture or the pressure of the recirculated medium is adjusted such

that the mixture either at a first pressure and at a temperature being slightly below a heat source of constant temperature boils constantly and is condensed at a second pressure differing from the first pressure within a decreasing temperature range, the temperature difference between the heat sink and the condensed medium being kept substantially constant during the heat transfer, or

is constantly condensed at a first pressure and at a temperature being slightly above a heat sink of constant temperature and is evaporated at a second pressure differing from the first pressure within an increasing temperature range, the temperature difference between the heat source and the evaporating medium being kept substantially constant during the heat transfer.

2. A process according to claim 1, characterised in that a two-substance mixture consisting of an alcohol and a hydrocarbon is used as the recirculated medium.

3. A process according to claim 2, characterised in that a mixture of ethanol and benzene is used.

4. A process according to claim 2, characterised in that a mixture of n-heptane and butanol-1 is used.

## Revendications

1. Procédé thermodynamique pour transférer de la chaleur d'un niveau de température plus bas à un niveau de température plus haut, étant précisé qu'un fluide constitué d'un mélange d'au moins deux composants passe dans un circuit fermé, que le fluide se vaporise en au moins un point du circuit par prélèvement de chaleur à partir d'une source de chaleur de température plus basse, se comprime, se condense en au moins un autre point du circuit avec transfert de chaleur sur un récepteur thermique de température plus haute et se détend à nouveau, et étant précisé que l'on utilise comme fluide passant dans le circuit un mélange qui se comporte comme mélange azéotrope soit sous la pression la plus basse lors de la vaporisation, soit sous la pression la plus haute lors de la condensation, caractérisé

en ce que l'on règle soit le rapport des proportions des composants contenus dans le mélange, soit la pression du fluide qui passe dans le circuit de façon telle que le mélange,

soit bouille constamment sous une première pression et sous une température située légèrement en dessous d'une source de chaleur de température constante et condense sous une seconde pression, différente de la première pression, à l'intérieur d'une zone de température décroissante, étant précisé que la différence de température entre le récepteur thermique et le fluide en cours de condensation est maintenue sensiblement constante au cours du transfert thermique,

soit condense constamment sous une première pression et sous une température située légèrement au-dessus d'un récepteur thermique de température constante et vaporise sous une seconde pression, différente de la première pression, à l'intérieur d'une zone de température croissante, étant précisé que la différence de température entre la source de chaleur et le fluide en cours de vaporisation reste sensiblement constante pendant le transfert thermique.

2. Procédé selon la revendication 1, caractérisé en ce que l'on emploie comme fluide de recyclage un mélange de deux composants, constitué d'un alcool et d'un carbure d'hydrogène.

3. Procédé selon la revendication 2, caractérisé en ce que l'on emploie un mélange d'éthanol et de benzol.

4. Procédé selon la revendication 2, caractérisé en ce que l'on emploie un mélange de n-heptane et de butanol-1.

0 094 931

FIG.1

FIG.2

1

FIG.3

FIG.4

FIG.5